Europäisches Patentamt

European Patent Office

Office européen des brevets

(19)

(11) Numéro de publication: **0 027 407**

**B1**

(12)
# FASCICULE DE BREVET EUROPEEN

(45) Date de publication du fascicule du brevet: **29.01.86**

(51) Int. Cl.⁴: **G 05 D 13/62, F 02 D 25/02**

(21) Numéro de dépôt: **80401413.2**

(22) Date de dépôt: **03.10.80**

(54) **Dispositif pour détecter une différence entre les vitesses de rotation de deux arbres tournants et application à une mesure ou à une commande d'asservissement.**

(30) Priorité: **16.10.79 FR 7925647**

(43) Date de publication de la demande:
**22.04.81 Bulletin 81/16**

(45) Mention de la délivrance du brevet:
**29.01.86 Bulletin 86/05**

(84) Etats contractants désignés:
**DE FR GB IT SE**

(56) Documents cités:
**DE-C- 123 632**
**GB-A- 271 622**
**GB-A- 713 944**
**US-A-1 856 024**
**US-A-2 861 638**
**US-A-2 958 999**

(73) Titulaire: **SOCIETE NATIONALE D'ETUDE ET DE CONSTRUCTION DE MOTEURS D'AVIATION, "S.N.E.C.M.A."**
**2 Boulevard Victor**
**F-75015 Paris (FR)**

(72) Inventeur: **Silhouette, Jean-Max Marie**
**54, boulevard Aristide Briand**
**F-77000 Melun (FR)**

(74) Mandataire: **Moinat, François et al**
**S.N.E.C.M.A. Service des Brevets Boîte Postale 81**
**F-91003 Evry Cedex (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

EP 0 027 407 B1

## Description

L'invention concerne un dispositif permettant de détecter une différence entre les vitesses de rotation de deux arbres tournants, afin notamment d'afficher cette différence de vitesses sur un appareil approprié, de réaliser un asservissement de la vitesse de rotation de l'un des arbres en fonction de la vitesse de rotation de l'autre arbre, ou de déclencher un automatisme lorsque la différence entre les vitesses de rotation des deux arbres atteint un seul déterminé.

Généralement, lorsque la vitesse de rotation d'un arbre doit être asservie à la vitesse de rotation d'un autre arbre, chacune des vitesses de rotation est déterminée au moyen d'un détecteur de vitesse de rotation indépendant comprenant des masselottes qui tournent avec l'arbre correspondant et agissent à l'encontre d'un ressort antagoniste pour déplacer un équipage mobile, et les équipages mobiles des deux détecteurs de vitesses de rotation sont reliés par un mécanisme comportant dans la plupart des cas un système de leviers et au moins une came. Un dispositif de ce type est décrit dans le brevet des Etats-Unis d'Amérique No 2 861 638 du 19 Septembre 1957 de R. A. Grosselfinger et Al.

De tels dispositifs présentent l'inconvénient d'être complexes, puisqu'ils comprennent deux détecteurs de vitesse indépendants comportant chacun un équipage mobile et un ressort antagoniste, ainsi qu'un mécanisme intermédiaire reliant les équipages mobiles de chacun de ces détecteurs.

On connait également, par exemple du brevet des Etats Unis d'Amérique No. 1 856 024 du 10 Mars 1924, des dispositifs dans lesquels deux régulateurs à boules indépendants sont influencés mutuellement l'un par l'autre au travers d'un ressort de couplage. Cependant, ces dispositifs ne permettent pas de réaliser un asservissement entre les vitesses de rotation de deux arbres selon une relation précise, ce couplage n'ayant qu'un effet dynamique. Des systèmes à boules, qui se révèlent inadaptés pour les applications à grande précision sont également utilisés par le brevet GB—A—271.622. Celui ci montre un dispositif pour détecter une différence entre les vitesses de rotation de deux arbres tournants dans lequel deux systèmes régulateurs à masses centrifuges sont montés directement en opposition et agissent sur un équipage mobile disposé entre les systèmes régulateurs, ces derniers étant sensibles à la vitesse de rotation de chacun des arbres tournants, pour transformer la force centrifuge à laquelle ils sont soumis en deux forces opposées appliquées sur l'équipage mobile qu'ils déplacent de façon progressive en fonction de la différence entre les vitesses de rotation de deux arbres tournants.

Par ailleurs, GB—A—713 944 donne un exemple d'utilisation de masselottes dans un système régulateur destiné dans ce cas à une détection de régime sur un arbres unique et qui comporte un ressort de contre-poussée. Il est toutefois insuffisant de remplacer les boules du dispositif selon GB—A—271 622 par des masselottes d'un type couramment utilisé, en particulier du type dont GB—A—713 944 fournit un exemple, pour obtenir un dispositif à déplacement progressif analogue.

Par ailleurs, on ne connait pas de mécanisme de détection de différence de vitesses de rotation utilisant des masselottes et permettant de réaliser un déclenchement franc d'un automatisme quelconque tel qu'un microrupteur ou un clapet.

La présente invention a pour objet la réalisation d'un dispositif utilisant des masselottes entièrement mécanique et particulièrement simple, permettant de comparer les vitesses de rotation de deux arbres tournants, un tel dispositif pouvant être utilisé, soit pour afficher la différence entre ces vitesses, soit pour réaliser un asservissement précis et constant selon une loi donnée de l'une des vitesses en fonction de l'autre, soit enfin, pour déclencher un automatisme tel qu'un interrupteur ou un clapet hydraulique ou pneumatique lorsque la différence entre les vitesses dépasse un seuil déterminé.

Le dispositif du type précité est caractérisé, selon l'invention en ce que les masses centrifuges sont réalisées par des masselottes pivotant autour d'un axe d'oscillation, présentant un angle θ, défini par le plan contenant l'axe d'oscillation de la masselotte et le centre de gravité de la masse active de la masselotte et le plan contenant ce même axe d'oscillation et le galet qui assure le contact entre la queue de la masselotte et l'équipage mobile, qui soit supérieur à 130°, de telle sorte que la somme de leurs raideurs respectives est négative et que le déplacement obtenu de l'équipage mobile est progressif et représentatif de la différence entre les vitesses de rotation des deux arbres. Le dispositif selon l'invention peut alors être utilisé, soit pour afficher cette différence sur un appareil approprié, soit pour réaliser un asservissement de l'une des vitesses par l'autre selon une loi précise.

Selon une deuxième variante, le dispositif, selon l'invention, est caractérisé en ce que les masses centrifuges sont réalisées par des masselottes pivotant autour d'un axe d'oscillation, présentant un angle θ, défini par le plan contenant l'axe d'oscillation de la masselotte et le centre de gravité de la masse active de la masselotte et le plan contenant ce même axe d'oscillation et le galet qui assure le contact entre la queue de la masselotte et l'équipage mobile, qui soit inférieur à 100° de telle sorte que la somme de leurs raideurs respectives est positive et que l'équipage mobile est sensible à deux valeurs déterminées de la différence entre les vitesses de rotation des deux arbres, pour se déplacer ainsi de manière brusque entre deux positions extrêmes. Le dispositif peut alors être utilisé pour déclencher an automatisme, sans qu'il existe une interaction d'un régime sur l'autre.

Conformément à l'invention, les deux détecteurs de vitesse de rotation usuels sont donc remplacés par un dispositif unique ne comprenant pas de ressorts antagonistes et ne comprenant qu'un équipage mobile disposé directement entre les deux systèmes de masselottes. Le système à boules précédemment connu est remplacé par un système à masselottes possédant des caractéristiques particulières. Chacun des systèmes de masselottes fait office de ressort antagoniste pour le système de masselottes opposé. Par ailleurs, le mécanisme reliant chacun des deux équipages mobiles dans certains dispositifs antérieurs est supprimé.

Ce dispositif particulièrement simple peut donner lieu à de nombreuses applications. Ainsi, selon que la somme des raideurs des systèmes de masselottes est négative ou positive, le dispositif selon l'invention peut être utilisé pour réaliser une mesure ou un asservissement, ou pour commander un automatisme.

L'asservissement peut être effectué de différentes manières. Ainsi, la relation la plus simple consistant à rendre la vitesse de rotation $N_2$ du système régulé égale à la vitesse de rotation $N_1$ du système de référence peut être obtenue en utilisant deux systèmes de masselottes identiques et en équipant l'équipage mobile d'un amplificateur capable de commander la vitesse de rotation $N_2$ en fonction de ses déplacements. On fait coïncider la position neutre de cet amplificateur avec la position neutre de l'équip-age mobile obtenue quand $N_1$—$N_2$. Cet amplifi-cateur peut être hydraulique, pneumatique, ou électronique. De même, la relation consistant à rendre la vitesse de rotation $N_2$ du système régulé égale à un multiple ou à un sous-multiple de la vitesse de rotation $N_1$ du système de référence peut être réalisée an ajoutant au dispositif ci-dessus un mécanisme tel qu'un système d'engrenages entre au moins l'un des systèmes et l'arbre correspondant du dispositif selon l'invention. Une relation du type $N_2=f(N1)$ peut être obtenue en associant au dispositif selon l'invention un jeu de masselottes classique sensible à la vitesse de rotation $N_1$ pour déplacer un organe muni d'une came déterminant la fonction à réaliser. Un levier coopérant avec la came déplace le forreau dans lequel se meut l'équipage mobile du dispositif selon l'invention. L'équipage mobile et le forreau constituent l'élément de détection de l'amplificateur hydraulique commandant le système régulé tournant à la vitesse $N_2$. Ce jeu de masselottes classique peut être remplacé par un détecteur de différence de pressions $\Delta P$ classi-que, de telle sorte que la relation entre les vitesses de rotation $N_2$ et $N_1$ est du type $N_2=N_1 \times f(\Delta P)$.

On décrira maintenant, à titre d'exemple non limitatifs, deux modes de réalisation particuliers de l'invention en se référant aux dessins annexés, dans lesquels:

— la figure 1 est une vue en coupe longitudinale d'un dispositif pour détecter une différence entre les vitesses de rotation des deux arbres tournants réalisé conformément aux enseignements de la présente invention, ce dispositif étant tel que la somme des raideurs des deux systèmes de masselotte est négative,

— la figure 2 est une courbe représentant les variations du couple exercé par un système de masselottes sur un équipage mobile en fonction d'un angle défini entre la droite joignant le centre de gravité de la masse active de chaque masselotte à son axe de pivotement et le plan radial passant par cet axe de pivotement,

— la figure 3 est un courbe représentant les variations des forces antagonistes exercées par les systèmes de masselottes sur l'équipage mobile en fonction du déplacement de cet équipage mobile dans le dispositif représenté sur la figure 1,

— la figure 4 est une vue en coupe longitudinale similaire à la figure 1 représentant un autre mode de réalisation du dispositif selon l'invention, dans lequel la somme des raideurs des deux systèmes de masselottes est positive,

— la figure 5 est une courbe représentant les variations des forces antagonistes exercées par les masselottes sur l'équipage mobile en fonction du déplacement de cet équipage dans le dispositif représenté sur la figure 4.

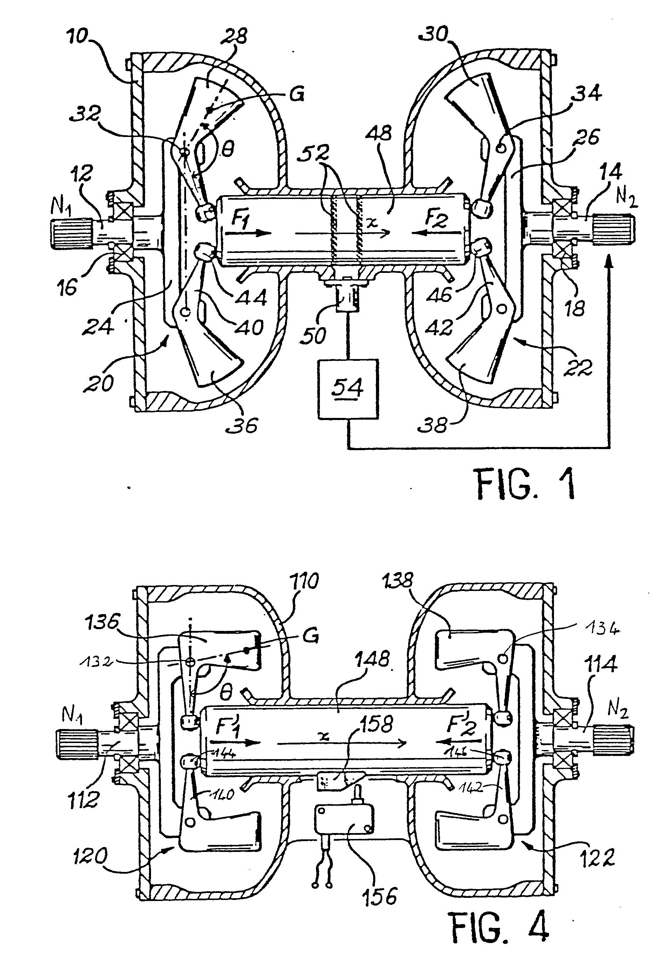

Le dispositif représenté sur la figure 1 com-prend un boîtier 10 définissant deux cloisons parallèles opposées que traversent deux arbres tournants axialement alignés 12 et 14, par l'intermédiaire de deux paliers 16 et 18 respectivement. Chacun des arbres 12 et 14 porte à l'intérieur de boîtier 10 un système de masselottes 20 et 22 respectivement. Les systèmes de masselottes 20 et 22 sont constitués par des plateaux 24 et 26 solidaires des arbres 12 et 14 et portant à leur périphérie des masselottes 28 et 30, en forme de V, montées pivotantes autour d'axes 32 et 34 qui s'étendent tangentiellement aux plateaux 24 et 26 et dans des plans radiaux par rapport aux arbres 12 et 14. Chacune des masselottes 28, 30 comprend une tête 36, 38 dans laquelle est concentrée la plus grande partie de la masse de la masselotte correspondante et une queue 40, 42 qui s'étend radialement vers l'intérieur pour co-opérer par un galet 44, 46 avec un équipage mobile 48 monté coulissant dans le boîtier 10. L'équipage 48 est disposé co-axialement aux arbres 12 et 14 entre les systèmes de masselottes 20 et 22. En raison de cette disposition, chacun des systèmes de masselottes 20 et 22 transforme la force centrifuge à laquelle il est soumis en raison de la rotation des arbres 12 et 14 correspondants en deux efforts axiaux opposés $F_1$ et $F_2$ respectivement, appli-qués à l'équipage mobile 48.

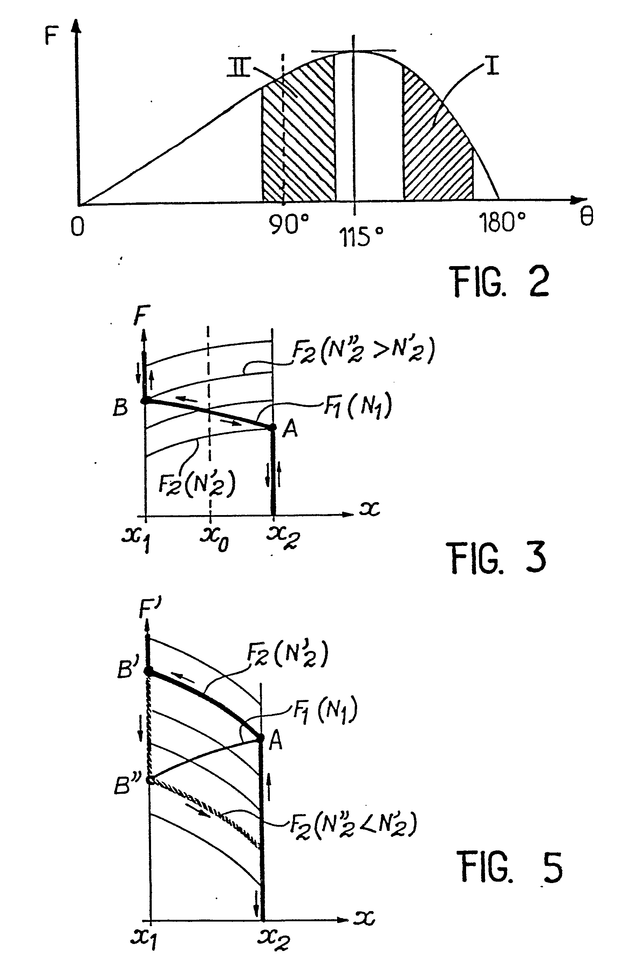

On se référera maintenant à la figure 2 qui représente les variations du couple C exercé par un système de masselottes du type des systèmes 20 et 22 sur un équipage mobile du type de l'équipage 48 en fonction de l'angle d'oscillation de masselotte.

On défini un angle θ constitutif de la masselotte 28 ou 30 formé par le plan contenant l'axe d'oscillation 32, 34 de la masselotte et le centre de gravité G de la masse active de la masselotte et par le plan contenant ce même axe d'oscillation 32, 34 et le galet 44, 46 qui assure le contact entre la queue 40, 42 de la masselotte 28, 30 et l'équipage mobile 48. Lorsque les queues 40, 42 des masselottes 28, 30 sont dans leur position habituelle de travail, c'est à dire radiales, un calcul simple et connu de l'homme de métier montre que l'effort axial F exercé par les masselottes 28, 30 sur l'équipage mobile 48 est proportionnel au couple C et que la raideur dF/dx du système de masselottes, c'est à dire la variation de l'effort axial F exercé par ce système sur l'équipage mobile en fonction du déplacement x de cet équipage mobile, est proportionnelle à la pente de la courbe de la figure 2 au point correspondant à l'angle θ caractéristique des masselottes.

Ainsi, la raideur dF/dx du système de masselottes est positive lorsque l'angle θ reste compris entre 0 et 100° et négative lorsque l'angle θ est compris entre 130° et 180°, et elle est sensiblement nulle, lorsque l'angle θ est voisin de 115°.

Dans la variante de réalisation représentée sur la figure 1, la somme des raideurs des deux systèmes de masselottes 20 et 22 est négative. Dans le cas de la figure 1, ce résultat est obtenu en choisissant deux systèmes de masselottes identiques et présentant chacun une raideur négative correspondant par exemple à la zone de fonctionnement I sur la figure 2. Cependant, ce résultat pourrait également être obtenu en utilisant deux systèmes de masselottes différents qui peuvent alors, soit présenter tous deux une raideur négative, soit présenter des raideurs de signes contraires, la raideur du système de raideur négative étant alors supérieure en valeur absolue à la raideur du système de raideur positive (zones de fonctionnement I et II sur la figure 2).

Afin de décrire le fonctionnement du dispositif représenté sur la figure 1, on se référera à la figure 3, qui représente les variations des forces antagonistes $F_1$ et $F_2$ appliquées par les systèmes de masselottes 20 et 22 sur l'équipage mobile 48 en fonction du déplacement x de ce dernier. Dans cette première variante de réalisation de l'invention, qui se caractérisé par le fait que la somme des raideurs des systèmes de masselottes 20 et 22 est négative, on verra que chacune des positions de l'équipage mobile 48 entre les positions extrêmes $x_1$ et $x_2$ qu'il est susceptible d'occuper sont des positions stables. Afin de faciliter la compréhension, on a supposé sur la figure 3 que la vitesse de rotation $N_1$ de l'arbre 12 est constante, de telle sorte qu'une seule courbe représente la variation de la force $F_1$ en fonction du déplacement x de l'équipage mobile 48 entre ses positions extrêmes $x_1$ et $x_2$.

Comme l'illustre la figure 3, l'équipage mobile 48 reste en $x_2$ tant que l'arbre 14 tourne à une vitesse $N_2$ inférieure à la vitesse $N'_2$ pour laquelle la valeur de la force $F_2$ en $x_2$ devient égale à la valeur de la force $F_1$ en $x_2$. Lorsque la vitesse de rotation $N_2$ de l'arbre 14 est supérieure à la vitesse $N'_2$, la valeur de la force $F_2$ en $x_2$ devient supérieure à la valeur de la force $F_1$ en $x_2$, de telle sorte que l'équipage mobile 48 commence à se déplacer de $x_2$ vers $x_1$. Le point représentatif de l'équilibre de l'équipage mobile 48 se déplace alors de A vers B sur la figure 3. Dès que les forces $F_1$ et $F_2$ deviennent égales, ce qui se produit à l'intersection des courbes représentatives des forces $F_1$ et $F_2$, l'équipage mobile 48 s'immobilise entre les positions extrêmes $x_1$ et $x_2$. Chaque position intermédiaire entre les positions extrêmes $x_1$ et $x_2$ définit donc une position stable pour l'équipage mobile 48. Chacune de ces positions stables correspond, dans l'hypothèse où la vitesse $N_1$ de l'arbre 12 est constante, à une valeur donnée de la vitesse $N_2$ de l'arbre 14, cette valeur étant comprise entre $N'_2$ et $N''_2$, $N''_2$ étant la vitesse de l'arbre 14 pour laquelle la valeur de la force $F_2$ en $X_1$ devient égale à la valeur de la force $F_1$ en $X_1$. Cependant, lorsque les vitesses $N_1$ et $N_2$ sont toutes deux variables, Chacune des positions stables de l'équipage mobile 48 correspondant à une valeur donnée de la différence entre les vitesses N1 et N2. Le caractère stable des positions intermédiaires de l'équipage mobile 48 se manifeste sur la figure 3 par l'existence de points d'intersection entre les courbes représentatives des forces $F_1$ et $F_2$ lorsque la vitesse de rotation de l'arbre 14 est comprise entre les vitesses $N'_2$ et $N''_2$.

Cette caractéristique est donc due au fait que la somme des raideurs des systèmes de masselottes 20 et 22 est négative, dans cette première variante de l'invention. Bien entendu, lorsque le point représentatif de l'équilibre de l'équipage mobile 48 arrive en B, c'est à dire lorsque l'équipage mobile 48 arrive en $x_1$, ce qui se produit lorsque la vitesse de rotation de l'arbre 14 est égale ou supérieure à $N''_2$, toute augmentation de la force $F_2$ n'apporte aucune modification de l'équilibre du dispositif.

Dans la première variante de l'invention représentée sur la figure 1, la position de l'équipage mobile 48 entre ses positions extrêmes $x_1$ et $x_2$ est donc représentative de la différence existant entre les vitesses de rotation des arbres 12 et 14.

Cette propriété peut être utilisée pour réaliser une mesure de cette différence, en utilisant l'équipage mobile comme indicateur, après avoir effectué un étalonnage. Cette propriété peut également être utilisée pour réaliser un asservissement de la vitesse de rotation de l'arbre 14 à la vitesse de rotation de l'arbre 12, ou inversement. Dans le mode de réalisation représenté à titre d'exemple sur la figure 1, cet asservissement a pour but de rendre la vitesse de l'arbre 14 égale à la vitesse de l'arbre 12. A cet effet, un détecteur 50 est logé dans le boîtier 10 afin de détecter le déplacement d'un ou plusieurs repères 52 formés sur l'équipage mobile 48. Les signaux délivrés par le détecteur 50 sont transmis à un système de commande 54 assurant l'entraînement en rotation de l'arbre 14, de façon à corriger la vitesse de rotation de ce dernier en fonction des informations reçues par le détecteur 50. Les systèmes de masselottes 20 et 22 sont par ailleurs identiques, de telle sorte que les courbes représentatives des forces $F_1$ et $F_2$ sont symétriques et de pente opposée sur la figure 3. L'équipage mobile 48 est donc maintenu en permanence à égale distance de ses positions extrêmes $x_1$ et $x_2$, de telle sorte que le point représentatif de cet équilibre se trouve toujours situé en $x_0$ sur la figure 3.

Bien entendu, le dispositif représenté sur la figure 1 peut être utilisé pour réaliser des asservissements plus complexes. Ainsi, ce dispositif non modifié peut être utilisé pour rendre la vitesse de rotation d'un système régulé égale à un multiple ou à un sous-multiple de la vitesse de rotation du système de référence. Un mécanisme de multiplication ou de démultiplication par exemple à engrenages, est alors disposé entre l'un des systèmes et l'arbre correspondant, 12 ou 14, du dispositif selon l'invention. Des asservissements beaucoup plus complexes peuvent encore être réalisés, par exemple en utilisant un amplificateur hydraulique dont le tiroir serait constitué par l'équipage mobile 48, cet équipage étant lui-même monté dans un fourreau également mobile. Selon la fonction à réaliser, le déplacement du fourreau peut être commandé par exemple par un détecteur à masselottes d'un type classique, sensible à la vitesse de rotation $N_1$ de l'arbre 12, si la vitesse de rotation $N_2$ de l'arbre 14 doit être asservie à cette vitesse $N_1$, ou encore par un détecteur de différence de pression $\Delta P$ si la vitesse $N_2$ doit être asservie à cette différence $\Delta P$. La fonction en elle-même est définie par une came solidaire de l'organe mobile du détecteur de vitesse ou du détecteur de différence de pression, sur laquelle prend appui un galet porté par un levier commandant les déplacements de l'amplificateur hydraulique. Des asservissements du type $N_2 = N_1 \times f(N_1)$ ou $N_2 = N_1 \times f(P)$ peuvent ainsi être réalisés.

Dans la seconde variante de réalisation de l'invention représentée sur la figure 4, le dispositif de détection est à peu près identique au dispositif de détection représenté sur la figure 1, la seule différence résidant dans la configuration des masselottes 136 et 138 des systèmes de masselottes 120 et 122, oscillant autour d'axes 132, 134 et comportant des queues 140 et 142 terminées par un galet 144, 146. En effet, la forme des masselottes 136 et 138 est telle que la somme des raideurs de chacun des systèmes de masselottes 120 et 122 est positive. Plus précisément, dans le mode de réalisation représenté, les systèmes 120 et 122 sont identiques et la raideur de chacun de ces systèmes est positive, ce qui résulte du fait que l'angle $\theta$ constitutif des masselottes est inférieur à environ 100°. La zone de fonctionnement de chacun des systèmes de masselottes est du type de la zone II sur la figure 2. L'angle $\theta$ est formé comme précédemment, par le plan contenant l'axe d'oscillation 132, 134 de la masselotte 136, 138 et le centre de gravité G' de la masse active de la masselotte et par le plan contenant ce même axe d'oscillation et le galet 144, 146 qui assure le contact entre la queue 140, 142 de la masselotte et l'équipage mobile 148.

On se référera maintenant à la figure 5, qui représente les variations des forces opposées $F_1$ et $F_2$ exercées par chacun des systèmes de masselottes 120 et 122 sur l'équipage mobile 148 en fonction de déplacement x de ce dernier entre ses deux positions extrêmes $x_1$ et $x_2$. Dans cette variante, le dispositif selon l'invention fonctionne de façon totalement différente de la variante représentée sur la figure 1, puisqu'il ne peut occuper que deux positions stables qui correspondent aux positions extrêmes $x_1$ et $x_2$. Pour simplifier, on n'a représenté sur la figure 5 qu'une seule courbe $F_1$ correspondant à une valeur bien déterminée $N_1$ de la vitesse de rotation de l'arbre 112.

En supposant que l'équipage mobile 148 occupe à l'origine la position $x_2$, cet équipage mobile reste dans cette position jusqu'à ce que la valeur de la force $F_1$ en $x_2$ devienne légèrement supérieure à la valeur de la force $F_1$ en $x_2$, c'est à dire au-delà du point A. Cette condition est réalisée lorsque la vitesse $N_2$ de l'arbre 114 devient légèrement supérieure à une valeur $N'_2$, ou, en supposant que la vitesse $N_1$ de l'arbre 112 est également variable, lorsque la différence entre les vitesses $N_1$ et $N_2$ atteint une valeur déterminée par construction. L'équipage mobile 148 se déplace alors vers $x_1$, ce qui a pour conséquence de faire augmenter la différence entre la force $F_2$ et la force $F_1$, et donc d'accélérer le déplacement de l'équipage mobile 148. L'équipage mobile 148 se déplace donc brutalement jusqu'en $x_1$ pour atteindre le point d'équilibre B' sur la figure 5. Il n'existe donc aucun point d'équilibre intermédiaire entre les points A et B', ce qui est illustré sur la figure 5 par l'absence de points d'intersection entre les courbes représentatives des forces $F_1$ et $F_2$ lorsque la vitesse de rotation de l'arbre 114 est supérieure à la vitesse $N'_2$.

Dans cette variante de réalisation, le dispositif présente une hystérésis. En effet, le retour de l'équipage mobile 148 en $x_2$ résultant d'une diminution de la vitesse de rotation $N_2$ de l'arbre 114 associé au système de masselottes 122 n'interviendra qu'au point B'' sur la figure 5, c'est à dire lorsque la vitesse $N_2$ deviendra inférieure à une vitesse $N''_2$ inférieure à la vitesse $N'_2$ et pour laquelle la valeur de la force $F_2$ en $x_1$ devient inférieure à la valeur de la force $F_1$ et $x_1$. Si l'on suppose que la vitesse de rotation $N_1$ de l'arbre 112 est également variable on peut dire que le déplacement de l'équipage mobile 148 est alors sensible à un second seuil de la différence des vitesses $N_1$ et $N_2$. L'équipage mobile 148 se déplace alors brutalement de $x_1$ vers $x_2$ étant donné qu'à tout déplacement de $x_1$ vers $x_2$ correspond une augmentation de la différence entre la force $F_1$ et la force $F_2$.

Dans la variante représentée sur la figure 4, le dispositif selon l'invention peut donc être utilisé pour déclencher de façon franche un système de commande d'un automatisme tel qu'un microrupteur 156 fixé au boîtier 110. Le microrupteur 156 peut être déclenché par exemple, au moyen d'une came 158 portée par l'équipage mobile 148, lorsque la différence entre les vitesses de rotations des arbres 122 et 114 dépasse les seuils correspondant aux points A et B'' sur la figure 5. Bien entendu, le microrupteur 156 peut être remplace par tout autre système de commande tel qu'une valve hydraulique ou pneumatique.

Les applications possibles du dispositif selon l'invention sont nombreuses et variées. Ainsi, la variante de réalisation de la figure 1 peut notamment être utilisée dans un réacteur double-corps pour mesurer les écarts entre les vitesses des deux arbres par rapport à une loi du type $N_2 = k . N_2$ ou pour asservir la vitesse de l'un à suivre l'autre dans cette loi en agissant sur le débit de combustible, ou la section de tuyère, ou le calage des aubes du stator ou un autre paramêtre déformable du réacteur.

### Revendications

1. Dispositif pour détecter une différence entre les vitesses de deux arbres tournants (12, 14) dans lequel deux systèmes régulateurs à masses centrifuges (20, 22) sont montés directement en opposition et agissent sur un équipage mobile (48) disposé entre les systèmes régulateurs, ces derniers étant sensibles à la vitesse de rotation de chacun des arbres tournants (12, 14) pour transformer la force centrifuge à laquelle ils sont soumis en deux forces opposées appliquées sur l'équipage mobile (48) caractérisé en ce que les masses centrifuges sont réalisées par des masselottes (28, 30) pivotant autour d'un axe d'oscillation (32, 34), présentant un angle θ, formé par le plan contenant l'axe d'oscillation (32, 34) de la masselotte (28, 30) et le centre de gravité G de la masse active de la masselotte et par le plan contenant ce même axe d'oscillation et le galet (44, 46) qui assure le contact entre la queue (40, 42) de la masselotte et l'équipage mobile (48), qui soit supérieur à 130 degrés, de telle sorte que la somme de leurs raideurs respectives est négative et que le déplacement obtenu (x) de l'équipage mobile (48) est progressif et représentatif de la différence entre les vitesses de rotation des deux arbres (12, 14).

2. Dispositif selon la revendication 1, caractérisé en ce que les deux systèmes de masselottes (20, 22) sont identiques.

3. Dispositif de mesure d'une différence entre les vitesses de rotation de deux arbres tournants (12, 14) selon l'une quelconque des revendications 1 et 2, caractérisé en ce qu'un système indicateur est associé à l'équipage mobile (48).

4. Dispositif d'asservissement de la vitesse de rotation d'un système régulé à la vitesse de rotation d'un système de référence selon l'une quelconque des revendications 1 et 2, caractérisé en ce qu'il comprend au moins un détecteur (50) du déplacement de l'équipage mobile (48) et des moyens de commande (54) du système régulé sensibles à des signaux délivrés par le détecteur (50) pour modifier la vitesse de rotation du système régulé afin de maintenir la différence entre les vitesses de rotation des arbres (12, 14) des systèmes à une valeur nulle.

5. Dispositif d'asservissement de la vitesse de rotation d'un système régulé à la vitesse de rotation d'un système de référence, selon l'une quelconque des revendications 1 et 2, caractérisé en ce que l'équipage mobile (48) constitue le tiroir d'un amplificateur hydraulique relié à des moyens de commande du système régulé, l'amplificateur hydraulique comprenant de plus un fourreau mobile dans lequel se déplace le tiroir, ledit fourreau étant susceptible de se déplacer en réponse au déplacement d'une came sensible à une gradeur physique telle qu'une vitesse de rotation ou qu'une pression.

6. Dispositif pour détecter une différence entre les vitesses des deux arbres tournants (112, 114) dans lequel deux systèmes régulateurs à masses centrifuges (120, 122) sont montés directement en opposition et agissent sur un équipage mobile (148) disposé entre les systèmes régulateurs, ces derniers étant sensibles à la vitesse de rotation de chacun des arbres tournants (112, 114) pour transformer la force centrifuge à laquelle ils sont soumis en deux forces opposées appliquées sur l'équipage mobile (148) caractérisé en ce que les masses centrifuges sont réalisées par des masselottes pivotant autour d'un axe d'oscillation (132, 134) et présentant un angle θ, formé par le plan contenant l'axe d'oscillation (132, 134) de la masselotte et par le plan contenant ce même axe d'oscillation (132, 134) et la galet (144, 146) qui assure le contact enter la queue (140, 142) de la masselotte et l'équipage mobile (148), qui soit inférieur à 100° degrés, de telle sorte que la somme de leurs raideurs respectives est positive et que l'équipage mobile (148) est sensible à deux valeurs déterminées de la différence entre les vitesses de rotation des deux arbres (112, 114), se déplaçant ainsi de manière brusque entre deux positions extrêmes (x1, x2).

7. Dispositif de déclenchement selon la revendication 6, caractérisé en ce que l'équipage mobile (148) porte une came (158) susceptible de venir déclencher de façon franche un système de commande (156).

### Patentansprüche

1. Vorrichtung zum Feststellen eines Unterschieds zwischen dem Umlaufgeschwindigkeiten von zwei sich drehenden Wellen (12, 14) mit zwei Regelungssystemen mit Fliehkraftgewichten (20, 22), die direkt in Gegenstellung montiert sind und auf ein bewegliches Organ (48) einwirken, das zwischen den Regelungssystemen angeordnet ist, wobei die Regelungssysteme auf die Umlaufgeschwindigkeiten der sich drehenden Wellen (12, 14) ansprechen und die Fliehkraft, der sie unterworfen sind, in zwei entgegengegestzt gerichtete Kräfte umwandeln, die an dem beweglichen Organ (48) angreifen, dadurch gekennzeichnet, daß die Fliehkraftgewichte von um eine Schwingachse (32, 34) verschwenkbaren Massenkörpern (28, 30) gebildet sind, die einen Winkel aufweisen, der von der die Schwingachse (32, 34) des Massenkörpers (28, 30) und den Schwerpunkt G der aktiven Masse des Massenkörpers enthaltenden Ebene und der die Schwingachse und den den Kontakt zwischen dem aktiven Ende (40, 42) des Massenkörpers und dem beweglichen Organ (40) gewährleistenden Rollkörper (44, 46) enthaltenden Ebene gebildet ist, wobei dieser Winkel größer als 130 Grad ist, derart, daß die Summe ihrer Widerstände gegen Formveränderungen negativ ist und daß die sich ergebende Verschiebung (x) des beweglichen Organs (48) progressiv und für die Differenz zwischen dem Umlaufgeschwindigkeiten der beiden Wellen (12, 14) kennzeichnend ist.

2. Vorrichtung nach Anspruch 1, dadurch gekennzeichnet, daß die beiden Massenkörpersysteme (20, 22) identisch ausgebildet sind.

3. Vorrichtung zur Messung eines Unterschieds zwischen den Drehgeschwindigkeiten zweier umlaufender Wellen (12, 14) nach einem der Ansprüche 1 und 2, dadurch gekennzeichnet, daß dem beweglichen Organ (48) ein Anzeigesystem zugeordnet ist.

4. Vorrichtung zur Regelung der Drehgeschwindigkeit eines Systems, das auf die Drehgeschwindigkeit eines Referenzsystems regelbar ist, nach einem der Ansprüche 1 und 2, dadurch gekennzeichnet, daß wenigstens ein Detektor (50) zur Erfassung der Verschiebung des beweglichen Organs (48) sowie Steuerungsmittel (54) zur Steuerung des geregelten Systems vorgesehen sind, die auf von dem Detektor (50) gelieferte Signale ansprechen, um die Drehgeschwindigkeit des geregelten Systems derart zu modifizieren, daß die Differenz zwischen den Drehgeschwindigkeiten der Wellen (12, 14) der Systeme auf den Wert Null gehalten wird.

5. Vorrichtung zur Regelung der Drehgeschwindigkeit eines Systems, das auf die Drehgeschwindigkeit eines Referenzsystems regelbar ist, nach einem der Ansprüche 1 und 2, dadurch gekennzeichnet, daß das bewegliche Organ (48) den Steuerschieber eines hydraulischen Verstärkers bildet, der mit Mitteln zur Steuerung des gesteuerten Systems verbunden ist, wobei der hydraulische Verstärker außerdem eine bewegliche Hülse besitzt, in der der Steuerschieber verschiebbar angeordnet ist, und wobei diese Hülse ihrerseits in Abhängigkeit von der Verschiebung eines Nockens verschiebbar ist, der auf eine physikalische Größe, beispielsweise auf eine Drehgeschwindigkeit oder einen Druck, anspricht.

6. Vorrichtung zum Feststellen eines Unterschieds zwischen den Umlaufgeschwindigkeiten von zwei sich drehenden Wellen (112, 114) mit zwei Regelunsgssystemen mit Fliehkraftgewichten (120, 122), die direkt in Gegenstellung montiert sind und auf ein bewegliches Organ (148) einwirken, das zwischen den Regelungssystemen angeordnet ist, wobei die Regelungssysteme auf die Umlaufgeschwindigkeiten der sich drehenden Wellen (112, 114) ansprechen und die Fliehkraft, der sie unterworfen sind, in zwei entgegengesetzt gerichtete Kräfte umwandeln, die an dem beweglichen Organ (148) angreifen, dadurch gekennzeichnet, daß die Fliehkraftgewichte von um eine Schwingachse (132, 134) verschwenkbaren Massenkörpern (128, 130) gebildet sind, die einen Winkel aufweisen, der von der die Schwingachse (132, 134) des Massenkörpers (128, 130) und den Schwerpunkt G der aktiven Masse des Massenkörpers enthaltenden Ebene und der die Schwingachse und den den Kontakt zwischen dem aktiven Ende (140, 142) des Massenkörpers und dem beweglichen Organ (40) gewährleistenden Rollkörper (144, 146) enthaltenden Ebene gebildet ist, wobei dieser Winkel kleiner als 100 Grad ist, derart, daß die Summe ihrer Widerstände gegen Formveränderungen positiv ist und daß das bewegliche Organ (148) auf zwei vorbestimmte Werte des Unterschieds zwischen den Umlaufgeschwindigkeiten der beiden Wellen (112, 114) anspricht, die sich auf diese Weise spontan zwischen zwei Extremstellungen $(x_1, x_2)$ verschieben.

7. Auslösevorrichtung nach Anspruch 6, dadurch gekennzeichnet, daß das bewegliche Organ (148) einen Nocken (158) trägt, mittels dessen ein Steuersystem (156) frei auslösbar ist.

## Claims

1. Device for detecting a difference between the speeds of two rotating shafts (12, 14) wherein two regulating systems with centrifugal weights (20, 22) are mounted directly in opposition and act upon a mobile arrangement (48) disposed between the regulating systems, the latter being sensitive to the rotational speed of each of the rotating shafts (12, 14) to convert the centrifugal force to which they are subjected into two opposite forces applied to the mobile arrangement (48), characterised in that the centrifugal weights are constituted by flyweights (28, 30) pivoting about a pivot axis (32, 34), defining an angle θ between the plane containing the pivot axis (32, 34) of the fly-weight (28, 30) and the centre of gravity G of the active mass of the fly-weight, and the plane containing said pivot axis and the follower (44, 46) which effects the contact between the tail (40, 42) of the fly-weight and the mobile arrangement (48), said angle being greater than 130 degrees, in such a manner that the sum of their respective rates of change is negative and the displacement obtained (x) of the mobile arrangement (48) is progressive and representative of the difference between the rotational speeds of the two shafts (12, 14).

2. Device according to claim 1, characterised in that the two fly-weight systems (20, 22) are identical.

3. Device for measuring a difference between the rotational speeds of two rotating shafts (12, 14) according to either of claims 1 and 2, characterised in that an indicating system is associated with the mobile arrangement (48).

4. Servo-device to make the rotational speed of a regulated system dependent on the rotational speed of a reference system according to either of claims 1 and 2, characterised in that it comprises at least one detector (50) of the displacement of the mobile arrangement (48) and control means (54) for the regulated system sensitive to signals supplied by the detector (50) to alter the rotational speed of the regulated system so as to maintain at a null value the difference between the rotational speeds of the shafts (12, 14) of the systems.

5. Servo-device to make the rotational speed of a regulated system dependent on the rotational speed of a reference system according to either of claims 1 and 2, characterised in that the mobile arrangement (48) constitutes the spool of an hydraulic amplifier connected to control means of the regulated system, the hydraulic amplifier comprising in addition a mobile sleeve in which the spool moves, said sleeve being able to move in response to the displacement of a cam sensitive to a physical phenomenon such as a rotational speed or a pressure.

6. Device to detect a difference between the speeds of two rotating shafts (112, 114) in which two regulating systems with centrifugal weights (120, 122) are mounted directly in opposition and act upon a mobile arrangement (148) disposed between the regulating systems, the latter being sensitive to the rotational speed of each of the rotating shafts (112, 114) to convert the centrifugal force to which they are subjected into two opposite forces applied to the mobile arrangement (148), characterised in that the centrifugal weights are supplied by fly-weights pivoting about a pivot axis (132, 134) and defining an angle θ between the plane containing the pivot axis (132, 134) of the fly-weight and the plane containing the same pivot axis (132, 134) and the follower (144, 146) which effects the contact between the tail (140, 142) of the fly-weight and the mobile arrangement (148), said angle being smaller than 100 degrees, in such a manner that the sum of their respective rates of change is positive and the mobile arrangement (148) is sensitive to two specific values of the difference between the rotational speeds of the two shafts (112, 144), thus moving in a sudden manner between two extreme positions (x1, x2).

7. Release device according to claim 6, characterised in that the mobile arrangement (148) has a cam (158) capable of effecting the clean release of a control system (156).

FIG. 1

FIG. 4

FIG. 2

FIG. 3

FIG. 5

2